Europäisches Patentamt

European Patent Office

Office européen des brevets

(11) Numéro de publication: **0 374 045**
**A1**

## (12) DEMANDE DE BREVET EUROPEEN

(21) Numéro de dépôt: **89403464.4**

(22) Date de dépôt: **13.12.89**

(51) Int. Cl.⁵: **G06F 15/62, A61B 6/02**

(30) Priorité: **14.12.88 FR 8816458**

(43) Date de publication de la demande:
**20.06.90 Bulletin 90/25**

(84) Etats contractants désignés:
**AT BE CH DE ES FR GB GR IT LI LU NL SE**

(71) Demandeur: **Schlumberger, Etienne**
**Tour Plein Ciel 8 rue Emile Deslandres**
**F-75013 Paris(FR)**

(72) Inventeur: **Schlumberger, Etienne**
**Tour Plein Ciel 8 rue Emile Deslandres**
**F-75013 Paris(FR)**

(74) Mandataire: **Bouju, André**
**Cabinet Bouju 38 avenue de la Grande**
**Armée**
**F-75017 Paris(FR)**

(54) **Procédé pour coordonner plusieurs images d'un même objet et dispositif pour sa mise en oeuvre.**

(57) Le procédé permet de coordonner entre elles plusieurs images d'un même objet (U), obtenues soit par transparence, soit par des systèmes de type photographique, sur un ou plusieurs plans images (P$_{I1}$, P$_{I2}$), à partir d'au moins deux sources (R$_1$, R$_2$), en donnant, dans l'espace, la position de chaque rayon formant chaque point d'image.

Un ensemble (M) de cinq points au moins, nommés "marqueurs" quatre coplanaires et un exterieur (S), peut être associé à l'objet. Les traces de ces points sur les diverses images peuvent ensuite servir à définir la position dans l'espace des sources (R$_1$, R$_2$) et des plans images (P$_{I1}$, P$_{I2}$) par rapport au système de "marqueurs" (M).

D'une manière plus générale, des points de l'objet en nombre suffisant et identifiables, mais de positions inconnues, peuvent être utilisés pour définir complètement les positions dans l'espace de l'ensemble du système.

FIG.1

EP 0 374 045 A1

**Procédé pour coordonner plusieurs images d'un même objet et dispositif pour sa mise en oeuvre**

La présente invention concerne un procédé pour coordonner dans l'espace plusieurs images par transparence d'un même objet, obtenues soit par transparence, soit par reproduction de type photographique.

L'utilisation d'installations fixes pour des prises de vues d'objets dans des directions différentes, par exemple, avec des rayons X, en vue d'obtenir les éléments nécessaires à la reconstitution d'images en trois dimensions, présente des inconvénients d'encombrement, de stabilité et de prix. Cependant, à ce jour de telles installations sont utilisées afin de permettre une coordination précise des images entre elles, coordination requise pour pouvoir reconstituer le volume représenté par ces images. Les exemples les plus courants sont ceux des scanners.

Dans la majorité des cas, les éléments bruts produits par l'analyse sont rassemblés sur des images bidimensionnelles, telles, par exemple, des radiographies. Sur de telles images, la caractéristique de chaque point de l'image résulte des caractéristiques cumulées de tous les points de l'objet se projetant en ce point de l'image.

Afin de tirer toutes les informations désirées, l'observateur a souvent besoin d'observer un objet à partir de plusieurs directions différentes ; mais alors, il éprouve souvent des difficultés à coordonner entre elles les diverses images à sa disposition.

La technique moderne fait de plus en plus appel à des procédés de reconstruction par ordinateur. Il en est ainsi pour le scanner.

D'une manière plus générale, le traitement informatique de plusieurs images entre elles exige que lesdites images et les sources qui les ont produites soient parfaitement repérées entre elles et par rapport aux objets de manière à ce que, lors du traitement, il soit possible de déterminer, sans ambiguité, l'exacte position dans l'espace de tous les rayons qui forment les points de différentes images.

Dans le texte ci-après le mot source est utilisé pour désigner le point de l'espace d'où convergent les divers rayons contribuant à la formation de l'image (par exemple source de rayons X en radiographie, objectif en photographie).

Le même besoin se fait sentir lorsqu'il s'agit par exemple de faire correspondre entre elles, des images obtenues par des procédés différents comme, par exemple la radiographie et la scintigraphie.

Afin d'arriver au résultat voulu, la pratique qui vient à l'esprit consiste à astreindre l'objet à observer à une position fixe et précise par rapport aux moyens d'observation, eux-mêmes fixés de manière précise. En particulier, il est alors indispensable que l'objet soit immobilisé au cours des prises de vue successives. Cette pratique est contraignante et limite considérablement les possibilités de prises de vues.

Le but de la présente invention est de proposer un procédé permettant de définir sans ambiguité pour chaque image la position de la source et de la plaque supportant ladite image par rapport à l'objet, permettant ainsi une coordination précise des images entre elles, sans nécessiter l'utilisation d'installations fixes lourdes et coûteuses.

Suivant une application particulière de l'invention, le procédé permettant de coordonner dans l'espace plusieurs images d'un même objet obtenues par projection sur un ou plusieurs plans images utilisant au moins deux sources, est caractérisé par les étapes suivantes:

a) on associe à l'objet un ensemble d'au moins cinq points liés audit objet et appelés marqueurs, quatre au moins desdits points marqueurs appartenant à un même plan dit de référence et un au moins desdits points étant extérieur audit plan de référence, lesdits points marqueurs étant d'une nature telle et situés de telle façon qu'ils apparaissent sur lesdites images et soient individuellement identifiables,

b) on détermine à partir des projections respectives desdits marqueurs appartenant audit plan de référence sur chacun desdits plans images liées auxdites sources, les directions respectives des intersections de chacun desdits plans images avec ledit plan de référence,

c) on détermine ensuite à partir des projections respectives desdits marqueurs extérieurs, la position de chacune desdites sources par rapport audit plan de référence, et de celle de chacun desdits plans images,

d) connaissant ainsi la position desdits plans images et de chacune desdites sources par rapport audit ensemble de marqueurs, on effectue la coordination des différentes droites concourant à la formation des projections dudit objet sur chacun desdits plans images.

L'utilisation d'un tel système permet des prises de vues successives tout en laissant à l'objet des latitudes de mouvement, soit en utilisant un seul système de prises de vue et en déplaçant l'objet, soit en déplaçant le système de prises de vue autour de l'objet, soit, enfin en utilisant deux procédés d'observation différents, la seule contrainte, facile à satisfaire, étant que les marqueurs soient visibles sur toutes les

2

images.

La découverte des propriétés d'un système de points marqueurs conforme à l'invention permettant de coordonner plusieurs images d'un même objet présente un caractère surprenant d'autant qu'il a été démontré par l'inventeur que d'autres systèmes comportant par exemple uniquement trois points définissant un plan et un point extérieur à ce plan, ou cinq points coplanaires, ne permettent pas de résoudre le problème général de coordination des images. L'idée de combiner au moins quatre points coplanaires à au moins un point extérieur pour obtenir un système de marqueurs permettant de résoudre le problème est à cet égard inattendue et originale.

Suivant une forme préférée de l'invention, les points marqueurs sont au nombre de cinq ; quatre d'entre eux forment les sommets d'un tetraèdre, le cinquième étant sur l'une des faces de ce dernier. En effet, si l'on considère une figure de quatre points dans un plan, projetée sur un autre plan à partir d'une source à distance finie, on peut montrer que la connaissance de la figure initiale et de sa projection sur un autre plan, permet de déterminer la direction de l'intersection des deux plans. La connaissance de cette direction permet à son tour, de déterminer la correspondance de tous les points du plan image avec ce que seraient leurs rétroprojections sur le plan de la figure initiale et, en particulier, la position de la projection du point extérieur sur le plan de la figure initiale, et par conséquent la direction de la source en ce point. Cette direction étant connue, l'utilisation des autres points permet de situer et la source et le plan de la figure projetée par rapport aux points marqueurs.

Ainsi se trouvent situées entre elles, les positions du plan image, de la source et des marqueurs et par conséquent de toutes les droites de projection dans l'espace formant les images de l'objet.

Cependant, lorsque les sources sont à l'infini, et donc que la projection est cylindrique, quatre points sont suffisants, trois d entre eux formant un plan de référence et le quatrième étant extérieur à ce plan.

De plus, lorsque le plan de référence et le plan image sont parallèles, l'intersection des deux plans est à l'infini. Deux points extérieurs au plan de référence sont alors nécessaires pour pouvoir établir la position de la source puis celle du plan image. Une situation limite concerne le cas où les deux plans de référence et image sont non seulement parallèles mais aussi sensiblement confondus.

Selon un autre aspect cette forme particulière de l'invention, on peut coordonner dans l'espace plusieurs images d'un même objet obtenues par projection sur un plan image liées à au moins deux sources. Le procédé est alors caractérisé par les étapes suivantes :

A) on associe au plan image, un plan de référence, lié à l'objet, sensiblement confondu avec ledit plan image et un système de marqueurs comprenant au moins deux couples de points marqueurs comportant au moins deux points dans ledit plan de référence et au moins deux points à l'extérieur dudit plan de référence, les droites joignant chaque point extérieur au point correspondant dans ledit plan de référence étant parallèles et définissant une direction de projection cylindrique,

B) on détermine à partir des projections desdits points extérieurs sur ledit plan de référence les positions desdites sources,

C) on détermine d'après les positions desdits points marqueurs compris dans ledit plan de référence, les projections desdites sources parallèlement auxdites droites de jonction, et leurs positions dans l'espace, par rapport auxdites projections desdits points extérieurs,

D) on détermine ensuite à partir desdites projections cylindriques desdites sources et à partir des projections respectives des points dudit objet, les projections cylindriques desdits points dudit objet sur ledit plan image et leur cote dans l'espace,

E) on détermine alors, à partir desdites projections cylindriques desdites sources sur ledit plan image et des projections respectives de l'objet sur ledit plan image et à partir desdites sources, un polyèdre dans ledit plan image délimitant la projection cylindrique dudit objet selon ladite direction de projection cylindrique,

F) on détermine, à partir desdites positions spatiales desdites sources et à partir des projections dudit objet, obtenues à partir desdites sources, un espace géométrique fermé tridimensionnel contenant ledit objet.

Ainsi dans cette version particulière du procédé selon l'invention, on prend en compte une situation qui se rencontre en pratique dans laquelle les plans de référence et image sont confondus. La fonction des points marqueurs selon l'invention consiste alors à localiser un objet dans l'espace ainsi que les différentes sources mises en oeuvre dans le procédé.

Dans toutes les formes de cet aspect particulier de l'invention, qu'il s'agisse de cinq points marqueurs (quatre points coplanaires et un point extérieur au plan) ou, lorsque le plan de référence et le plan image sont parallèles (trois points définissant un plan et deux extérieurs à celui-ci) ou confondus (plan de référence marqué et deux points extérieurs), ou lorsque les sources sont à l'infini (quatre points), les démarches employées lors de l'exécution des différentes étapes du procédé sont semblables : déterminer

3

la position des sources par rapport au système de marqueurs, puis celle du plan image et, lorsque les positions ont été déterminées, localiser spatialement les rayons concourant à la formation des images de l'objet par rapport au système de marqueurs.

La différence essentielle entre ces deux aspects du procédé conforme à l'invention réside dans le fait que le nombre d'inconnues spatiales à déterminer dans le dernier aspect de l'invention (plan image et plan de référence confondus) est inférieur à celui considéré dans le premier aspect pour lequel la détermination de la position relative du plan image par rapport au plan de référence nécessite la détermination de neuf inconnues.

Lorsque les deux plans sont confondus, deux des quatre points marqueurs coplanaires du procédé ne sont alors plus nécessaires et deux points marqueurs appartenant au plan de référence associé chacun à un point marqueur extérieur à ce plan suffisent. Cependant, comme dans le premier aspect du procédé, il est tout à fait possible de considérer plusieurs points marqueurs coplanaires et plusieurs points marqueurs extérieurs qui contribuent par redondance à augmenter en pratique la précision du procédé de coordination d'images.

Selon un autre aspect de l'invention, le dispositif pour la mise en oeuvre du procédé, comprenant des moyens pour obtenir des projections sur des plans images d'au moins un objet par transmission d'ondes influencées par le passage dans cet objet à partir de sources de ces ondes, est caractérisé en ce qu'il comprend :

- des moyens marqueurs liés audit objet, définissant au moins un plan de référence, et d'une nature telle et situés de telle façon que lesdits moyens marqueurs apparaissent sur lesdites images et soient individuellement identifiables,

- des moyens pour déterminer les directions des intersections respectives desdits plans images avec ledit plan de référence,

- des moyens pour déterminer les positions respectives desdites sources par rapport auxdits moyens marqueurs,

- des moyens pour déterminer les positions respectives desdits plans images par rapport auxdits moyens marqueurs,

- des moyens pour coordonner lesdites projections dudit objet, à partir desdites positions.

Ainsi, avec le dispositif conforme à cette forme particulière de l'invention, il est possible de coordonner plusieurs images projetées différentes pour lesquelles, l'objet ayant bougé entre chaque prise d'image, la position relative des plans images et des sources par rapport au plan de référence,donc à l'objet, a changé.

Selon encore un autre aspect de l'invention, le procédé pour coordonner dans l'espace plusieurs images d'un même objet soumis à une irradiation provoquant une émission secondaire, telle qu'un flux de neutrons, obtenues sur un ou plusieurs plans images à partir de sources de rayonnement induites dans ledit objet, est caractérisé par les étapes suivantes :

A) on associe à l'objet au moins un ensemble d'au moins cinq points liés audit objet et appelés marqueurs, quatre desdits points formant un plan de référence, et un au moins desdits points étant extérieur audit plan de référence, lesdits points marqueurs étant d'une nature telle qu'ils donnent après collimation des traces sur lesdites images et situés de telle façon qu'ils apparaissent sur lesdites images et soient individuellement identifiables,

B) on détermine, après collimation, sur chaque image produite par lesdites sources internes, la trace desdits points marqueurs appartenant audit plan de référence, et celle dudit point extérieur,

C) on détermine ensuite, après collimation, sur chaque image produite par lesdites sources internes, à partir des traces desdits points marqueurs, les directions de collimation et les positions respectives de chacun desdits plans images par rapport audit plan de référence, et

D) on effectue alors la localisation dans l'espace des différentes droites de collimation concourant à la formation des images dudit objet sur chacun desdits plans images par rapport audit plan de référence.

Le procédé peut ainsi être appliqué aux images obtenues par utilisation des rayonnements émis par un objet, soit d'origine propre comme en scintigraphie, soit d'origine induite comme les émissions provoquées par un flux de neutrons ou tout autre flux d'excitation y compris les rayons lumineux. Les sources ne sont alors plus extérieures à l'objet mais présentes sur ou induites dans l'objet lui-même.

Le dispositif mettant en oeuvre le procédé conforme à l'invention dans le domaine de la scintigraphie, ou dans celui des émissions induites, comprend :

A) des moyens marqueurs, pouvant émettre des radiations, définissant au moins un plan de référence et un point extérieur, d'une nature telle et situés de sorte que des traces desdits moyens marqueurs apparaissent après collimation sur lesdites images et soient individuellement identifiables,

B) des moyens pour déterminer les directions de collimation et les positions respectives desdits plans images par rapport auxdits moyens marqueurs, à partir desdites traces,

4

EP 0 374 045 A1

C) des moyens pour coordonner dans l'espace des rayons concourant à la formation des images dudit objet à partir des positions respectives desdits plans images et desdites directions de collimation par rapport auxdits moyens marqueurs.

Ce dispositif peut en outre être utilisé avec des dispositifs de coordination d'images mettant en oeuvre des moyens influençant la transmission d'ondes émises par des sources externes, tels que décrits précédemment, soit en choisissant des marqueurs d'une nature telle que leurs traces apparaissent dans tous les procédés d'imagerie employés, soit en utilisant des systèmes de marqueurs spécifiques à chaque cas mais géométriquement liés entre eux. Il est ainsi possible d'associer, par exemple, radiographie et scintigraphie, ou neutronographie, et les images formées par émissions induites par le flux de neutrons, en prévoyant des systèmes de marqueurs adaptés à chaque technique d'investigation.

Les procédés et les dispositifs précités énoncent des solutions géométriques au problème posé.

Le déposant a également découvert que le problème de l'invention pouvait être résolu par une solution des solutions géométriques au problème posé.

Le déposant a également découvert que le problème de l'invention pouvait être résolu par une solution algébrique.

Selon cet aspect de l'invention, le procédé pour coordonner dans l'espace plusieurs images d'un même objet obtenues par transparence ou par reproduction notamment photographique, ces images étant obtenues à partir d'un nombre $n$ de moyens sur un nombre $n$ de plans ou surfaces images confondus ou non, est caractérisé par les étapes suivantes :

A) on utilise un ensemble constitué par un nombre $p$ de points remarquables et identifiables, préexistants sur l'objet ou associés à celui-ci et dont les traces soient visibles sur toutes les images,

B) on détermine à partir de l'ensemble des traces desdits points sur les différentes images, dans un système de repères pratiques, les coordonnées de l'ensemble des sources, points identifiables et surfaces images,

C) ces coordonnées étant calculées en résolvant un ensemble de relations linéaires résultant de l'alignement des points, de leur image et de l'origine des rayons utilisés pour former lesdites images desdits points,

D) cet ensemble de relations étant représentés par une matrice dont la solution est possible dans la mesure où existe la relation $2pn \geq 9n + 3p-S$ où S représente le nombre de relations géométriques connues existant dans le système, cette relation déterminant le nombre minimum de points requis.

D'autres particularités et avantages de l'invention apparaîtront encore dans la description ci-après.

Aux dessins annexés données à titre d'exemples non limitatifs :

- la figure 1 est une vue schématique montrant un objet muni de marqueurs et deux projections de celui-ci, plan de référence, des marqueurs et de leurs projections sur le plan image et sur un plan parallèle à celui-ci ;

- la figure 3 est une vue montrant le procédé graphique de détermination de la direction de l'intersection des plans image et de référence,

- la figure 4 est une vue d'une construction graphique intermédiaire nécessaire pour la détermination de la position d'une source,

- la figure 5 est une vue montrant le procédé graphique de détermination de la position d'une source par rapport au plan de référence,

- la figure 6 est une vue illustrant une version particulière du procédé conforme à l'invention dans laquelle le système de marqueurs comprend deux ensembles liés,

- la figure 7 représente en perspective une réalisation concrète d'un système de marqueurs dans laquelle les plans image et de référence sont sensiblement confondus,

- la figure 8 est une vue en perspective de la construction géométrique effectuée à partir des projections du système de marqueurs de la figure 6,

- la figure 9a est une vue de la construction géométrique effectuée dans le plan de référence pour déterminer la projection verticale d'un objet ponctuel, dans la configuration particulière de la figure 7,

- la figure 9b est une vue de la construction géométrique permettant d'obtenir la cote de l'objet ponctuel dont la projection verticale a été déterminée à la figure 7,

- la figure 10 illustre l'étape de superposition de trois clichés selon l'invention,

- la figure 11a représente la superposition de trois clichés d'un objet massif,

- la figure 11b illustre l'application du procédé de coordination conforme à l'invention au positionnement de l'objet massif considéré à la figure 11a.

- la figure 12 est une vue montrant le procédé graphique de détermination dans le cas de sources à l'infini.

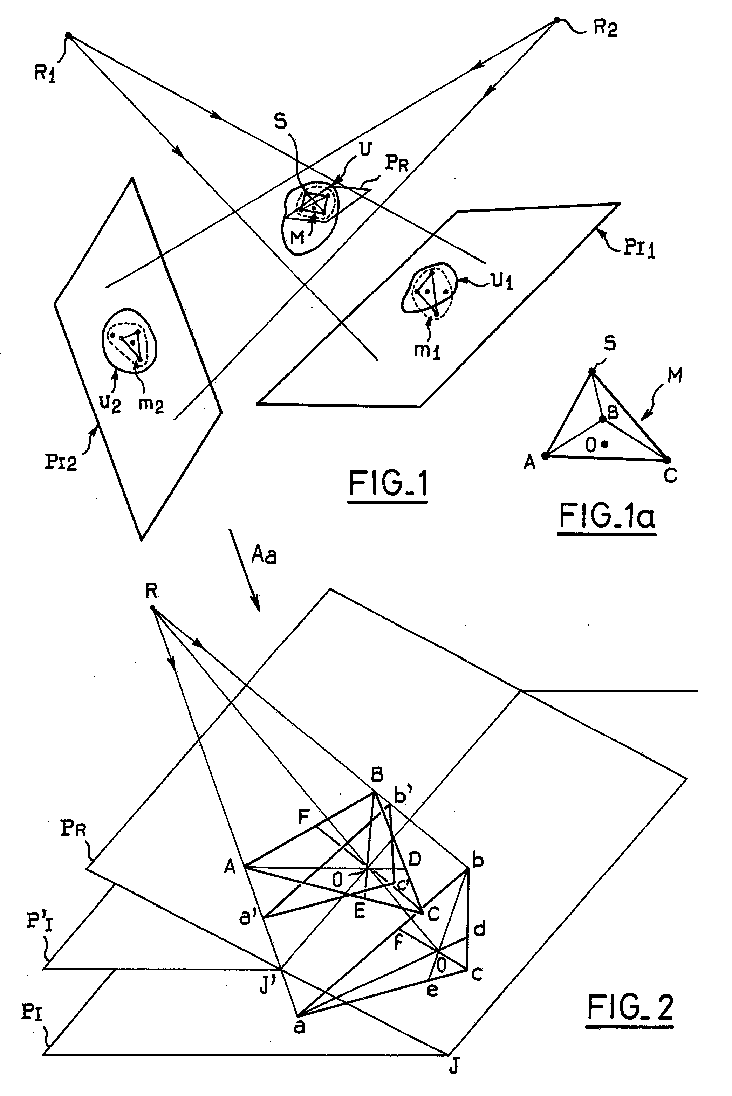

L'objet de ce procédé conforme à l'invention est de permettre la coordination de plusieurs images d'un

5

même objet. La figure 1 illustre une situation particulière de mise en oeuvre du procédé. On considère un objet U soumis, de façon simultanée ou successive, à deux faisceaux d'ondes issues de deux sources distinctes sensiblement ponctuelles R1 et R2.

On dispose ainsi dans le cas général des projections u1, u2 de l'objet U sur deux plans images distincts $P_{I1}$, $P_{I2}$. L'objet U a été préalablement muni d'un système M de marqueurs, conformément à l'invention.

Ce système comporte quatre points coplanaires, définissant un plan de référence $P_R$ et un point extérieur S. Les marqueurs M sont réalisés dans un matériau influençant la transmission des ondes émises par les sources $R_1$ et $R_2$ et présentent donc des projections $m_1$, $m_2$ observables sur les plans images $P_{I1}$, $P_{I2}$.

Il s'agit d'obtenir, grâce au procédé conforme à l'invention, la localisation des plans images $P_{I1}$, $P_{I2}$ et des sources $R_1$, $R_2$ par rapport au système de marqueurs M. Cette localisation conduit alors aisément à une coordination des images $m_1$, $m_2$, comme on le montrera plus loin.

La localisation peut s'effectuer de façon indépendante pour chaque système [source R/marqueurs M/plan-image $P_I$] et s'effectue globalement en deux étapes :

a) détermination de la direction d'intersection du plan image $P_I$ avec le plan de référence $P_R$,

b) détermination de la position de la source R et du plan image P,

La figure 2 illustre la construction géométrique, à la base du procédé conforme à l'invention, utilisée pour la détermination de la direction d'intersection. La connaissance de cette direction est essentielle car, quel que soit le type de projection, les segments sur une droite projetante et une droite projetée parallèles à ladite intersection sont en similitude. Il est ainsi possible d'obtenir une règle facile permettant de passer d'une projection d'un point sur le plan image à ce que serait la rétroprojection de ce point sur le plan de référence. On considère un ensemble de quatre points A, B, C,O appartenant au plan de référence $P_R$.

La présence de la source ponctuelle R détermine une projection conique de l'ensemble ABCO sur le plan image $P_I$, représentée par abco sur la figure 2.

On considère le plan $P'_I$ parallèle au plan image $P_I$ et passant par O. Soient a' b' c' o les projections coniques de l'ensemble ABCO sur le plan $P'_I$ qui seraient obtenues à partir de la source R. Les images abco et a'b'c'o sont semblables.

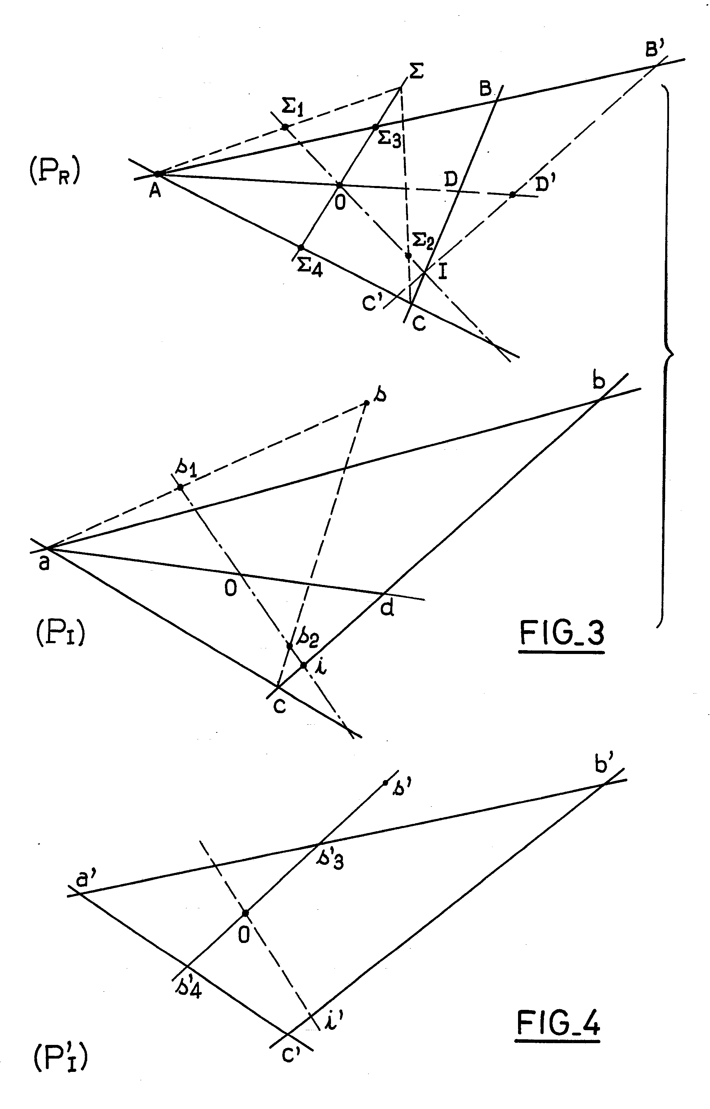

Soient AB'C'O, ensemble de points appartenant au plan de référence $P_R$ et qui seraient les projections cylindriques suivant la direction Aa des points a' b' c' o dans le plan $P'_I$ (figure 3).

A ce stade, les positions respectives des points B' et C' par rapport au groupe de marqueurs ABCO sont des inconnues. Cependant, du fait de la projection selon Aa, les projections des droites passant par A sont conservées,on sait que B' et C' se trouvent respectivement sur les droites AB et AC.

Soient D l'intersection de la droite AO avec la droite BC, d sa projection conique sur le plan $P_I$ à partir de la source R, d' sa projection conique sur le plan $P'_I$ et D' la projection cylindrique suivant Aa de d' sur le plan de référence $P_R$. Seuls D et d sont connus tandis que les projections d' et D' sont inconnues.

Une propriété fondamentale d'une projection cylindrique est que les segments de deux droites correspondantes, quelles qu'elles soient, se projettent avec des rapports égaux. Cette même propriété se retrouve en projection conique entre plans parallèles.

On peut donc écrire, en référence à la figure 3, que :

$$\frac{\overline{AO}}{\overline{OD'}} = \frac{\overline{ao}}{\overline{od}} \qquad (1)$$

Les longueurs $\overline{AO}$, $\overline{ao}$, $\overline{od}$ étant connues, on en déduit OD' et donc la position du point D', sachant que ce dernier appartient à la droite AD, du fait de la conservation des angles ayant leur sommet en A.

Par ailleurs, l'égalité des rapports de segments en projection cylindrique permet aussi d'écrire que :

$$\frac{\overline{D'B'}}{\overline{D'C}} = \frac{\overline{db}}{\overline{dc}} \qquad (2)$$

Or, les longueurs $\overline{db}$ et $\overline{dc}$ sont connues.

Il est alors possible, sachant que B' et C' se trouvent respectivement sur les droites AB et AC et connaissant le rapport

$$\frac{\overline{D'B'}}{\overline{D'C'}}$$

de déterminer la position de $B'$ et $C'$ par rapport au système de marqueurs ABCO.

Dans une projection, qu'elle soit conique ou cylindrique, l'intersection entre le plan initial et le plan de projection reste inchangée. Or B, C et $B'$, $C'$ sont respectivement les correspondants en projection conique et en projection cylindrique de $b'$ $c'$. L'intersection des droites BC et $B'C'$ appartient donc forcément à l'intersection $J'$ du plan de référence $P_R$ et du plan $P'_I$, parallèle au plan image $P_I$ et passant par O.

Soit I, l'intersection des droites BC et $B'C'$ ; la droite passant par 0 et par I donne l'intersection des plans $P_R$ et $P'_I$ et donc la direction de l'intersection des plans $P_R$ et $P_I$.

Si l'on se reporte dans le plan image $P_I$, le point i correspondant du point I en projection cylindrique suivant Aa peut être obtenu en écrivant que :

$$\frac{\overline{ic}}{\overline{ib}} = \frac{\overline{IC'}}{\overline{IB'}} \qquad (3)$$

Les segments $IC'$ et $IB'$ étant connus et sachant que i se trouve sur la droite bc, on obtient ainsi la position de i dans le plan image $P_I$ et la direction oi de l'intersection du plan image $P_I$ et du plan de référence.

Dans le cas particulier où la figure formée par les quatre points du plan de référence permet de définir, dans ce plan, au moins deux ensembles de droites parallèles (par exemple, un triangle isocèle et son barycentre), le point de convergence sur l'image des parallèles projetées donne également la direction de l'intersection.

b) Il s'agit maintenant de déterminer la position de la source ponctuelle R par rapport au système marqueur ABCOS.

Dans le plan-image $P_I$, les droites issues de a et de c vers s découpent sur la droite oi des segments semblables à ceux découpés sur OI par les droites joignant les points A et B au point $\Sigma$, ombre du sommet S sur le plan de référence $P_R$.

Ainsi, en référence à la figure 3,

$$\frac{s_1 o}{\Sigma_1 o} = \frac{s_2 o}{\Sigma_1 o} = \frac{s_1 s_2}{\Sigma_1 \Sigma_2} \qquad (4)$$

Il en est de même pour trouver la correspondance de tout point de $P_I$ et de $P_R$.

On peut ainsi déterminer géométriquement le point $\Sigma$ dans le plan de référence $P_R$. La direction de la source R est alors donnée par S $\Sigma$.

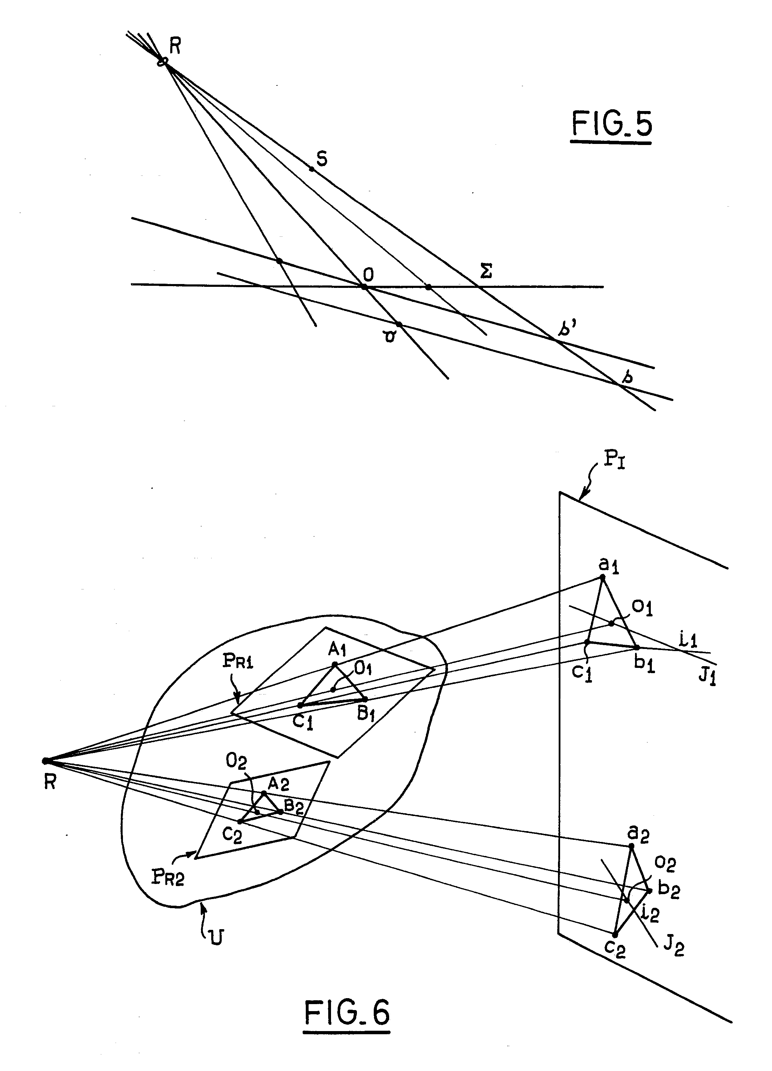

Si on considère le plan passant par les points S $\Sigma$ et O, en référence à la figure 5, la projection conique $s'$ du point extérieur S sur le plan $P'_I$ est situé sur la droite passant par S et $\Sigma$.

La position de s, projection conique de S sur $P_I$, étant connue par rapport au triangle a b c, et ce dernier étant semblable au triangle $a'$ $b'$ $c'$, la position de $s'$ par rapport au triangle $a'$ $b'$ $c'$ dans le plan $P'_I$ peut être aisément déterminées ainsi que la distance $\overline{s'o}$, en référence à la figure 5.

Connaissant $\overline{s o}$ et sachant que $s'$ appartient à la droite $\Sigma s$, on détermine alors la position de $s'$ dans le plan S$\Sigma$O, et de même, l'angle $s'$O$\Sigma$.

En effet, le rapport de similitude des triangles abc et $a'b'c'$ est connu par le rapport des longueurs des intersections avec le plan $P_R$ intersectées par les droites $a'b'$, $a'c'$ et ab, ac ; il sera égal au rapport de $s'$O à so. Cette construction est applicable pour chaque point du plan.

On connaît aussi les intersections respectives $\Sigma3$, $\Sigma4$ de la droite $\Sigma$O avec les segments AB et AC dans le plan $P_R$ (figure 3), et les intersections respectives $s'3$, $s'4$ de la droite $s'o$ avec les segments $a'b'$ et $a'c'$ dans le plan $P'_I$ (figure 4).

On obtient alors la position de la source R par intersection des droites $\Sigma_3 s'_3$ et $\Sigma'_4 s'_4$, les points $\Sigma_3$, $\Sigma_4$ étant les correspondants respectifs de $s'_3$, $s'_4$ dans la projection conique par rapport à la source R.

On dispose ainsi de la position de la source R et de la direction de l'intersection $J'$ par rapport au système de marqueurs ABCOS et de l'angle découpé par les plans $P_R$ et $P'_I$ sur le plan SO$\Sigma$.

La connaissance de ces éléments permet de déterminer la position de l'intersection du plan de référence et du plan image et, ainsi, la position du plan image.

Ce procédé peut être appliqué à d'autres procédés de sources/plans-images avec le même principe de marqueurs. Il est ainsi possible d'obtenir grâce aux marqueurs une coordination des images d'un même objet obtenues par des techniques différentes.

L'emploi de quatre points coplanaires et d'un point extérieur au plan, comme cela vient d'être décrit, peut donner une redondance insuffisante dans certains cas d'image : toute addition de points supplémentaires donne, nécessairement des indications complémentaires. Tel est, en particulier, le cas pour deux points extérieurs au lieu d'un seul : en effet, une fois déterminée la direction de l'intersection, l'utilisation de ces deux points permet une localisation immédiate de la source. De même, comme indiqué précédemment, ces deux points extérieurs peuvent être nécessaires dans certains cas particuliers.

De même, un système de marqueurs comportant deux ensembles de quatre points coplanaires permet de choisir le plan de figure initiale le plus favorable, certains points de deux ensembles pouvant d'ailleurs être confondus.

En outre, la combinaison d'un nombre de points extérieurs supérieur à un et de plusieurs ensembles d'au moins quatre points coplanaires, les rôles de points extérieurs et de points coplanaires pouvant être échangés et combinés, peut permettre des résolutions optimales en matière de précision et de redondance.

La figure 6 illustre le cas où les marqueurs sont constitués de deux ensembles de quatre points coplanaires situés respectivement dans les plans de référence $P_{R1}$ et $P_{R2}$ liés à l'objet U. Avec le procédé conforme à l'invention décrit précédemment, il est possible de déterminer les directions d'intersection $J_1$, $J_2$ respectives des plans de référence $P_{R1}$ et $P_{R2}$ avec le plan-image $P_I$. On peut alors en déduire la position de la source R par rapport aux deux plans de référence $P_{R1}$, $P_{R2}$.

Il suffit par exemple de considérer un système de points marqueurs constitué par les quatre points coplanaires A1, B1, C1, O1, appartenant au plan de référence $P_{R1}$ et par un point extérieur pris parmi l'un des quatre autres points coplanaires A2, B2, C2, 02 du plan $P_{R2}$.

On applique alors le procédé décrit précédemment dans le cas d'un ensemble unique de marqueurs et on obtient à partir de A1, B1, C1, O1, la direction de l'intersection $J_1$ du plan image $P_I$ avec le plan de référence $P_{R1}$ puis avec le point extérieur, la position de la source et du plan image.

On peut procéder ensuite de façon symétrique avec le système de points marqueurs A2, B2, C2, O2, complété par l'un quelconque des points du plan de référence $P_{R1}$ et on obtient la direction de l'intersection $J_2$ du plan image J avec le plan de référence $P_{R2}$. La détermination de la position de la source R et du plan image peut s'effectuer de la façon décrite plus haut.

L'utilisation de deux plans de référence, qui doivent être nécessairement liés, permet d'augmenter, dans certains cas, la précision de positionnement dans la mesure où on peut disposer ainsi de 8 systèmes de marqueurs redondants. Il est également possible d'utiliser deux systèmes liés complets de marqueurs à cinq points.

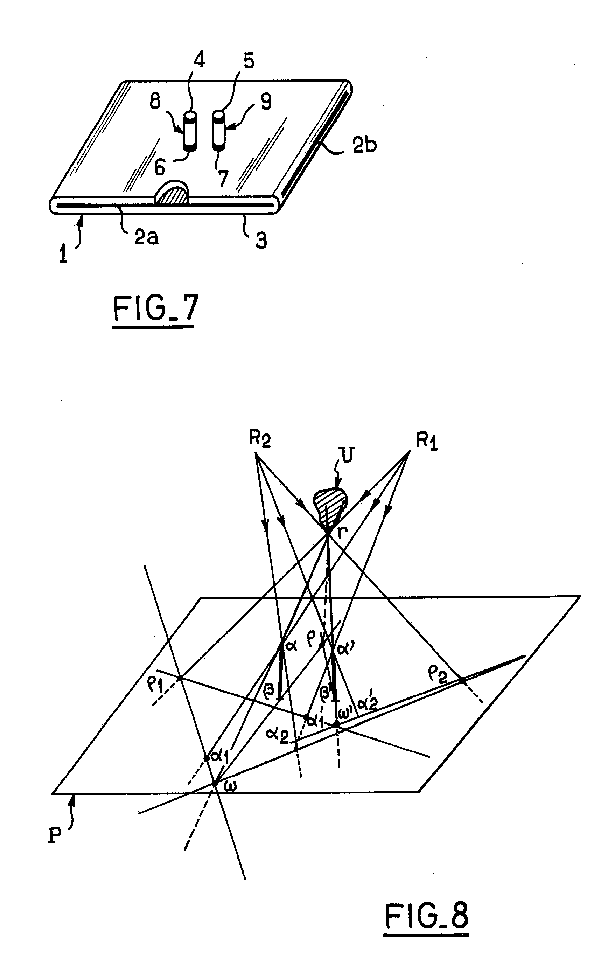

La figure 7 illustre le cas particulier où le plan de l'image initiale et le plan de l'image projetée sont, soit confondus, soit si proches qu'ils puissent être considérés comme confondus. Ce cas se rencontre, en particulier, en imagerie dentaire.

Une réalisation effective mais non limitative du procédé est décrite ci-dessous.

Une plaque photographique 3 est insérée dans un étui rigide 1 et transparent aux rayons X, par le biais de l'une des fentes 2a, 2b. L'étui 1 comporte deux pylônes 8,9 orientés perpendiculairement au plan de référence de l'étui.

Chacun des pylônes 8, 9 est muni respectivement de deux éléments 4, 6 ; 5, 7 en matériau influençant particulièrement la transmission des rayons X, tel que du plomb par exemple, et pouvant être au besoin identifiés.

L'étui est placé dans la bouche du patient, dans une position à priori non définie avec précision mais qui ne change plus par rapport au système dentaire. Différents clichés sont pris après changement de la plaque photographique au cours desquels la position relative de la source de rayons X $R_1$, $R_2$ par rapport à l'étui, donc à la bouche a changé. Un objet de l'invention est de fournir au praticien un procédé de coordination des différents clichés afin que celui-ci soit en mesure d'interpréter les différentes projections de l'objet et de positionner précisément un objet dans l'espace en l'occurence, une dent, un ensemble de dents ou un détail tel qu'une dent incluse par exemple.

Il va s'agir de superposer les différents clichés en utilisant comme repères de superposition les traces des bases des deux pylônes.

Soit les deux pylônes $\sigma$ et $\sigma'$ de bases $\beta$ et $\beta'$ et de sommets $\alpha$ et $\alpha'$.

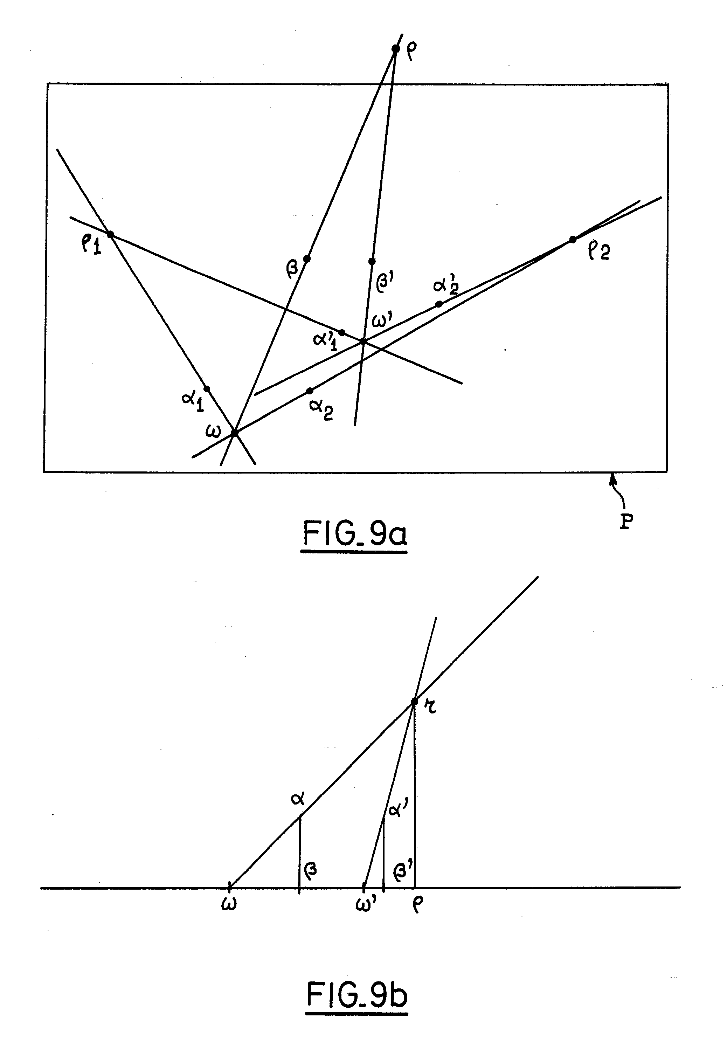

La figure 8 illustre de façon schématique la construction géométrique conforme à l'invention permettant d'obtenir la projection d'un point r d'un objet U sur le plan P selon la direction des pylônes $\beta\alpha$, $\beta'\alpha'$, dans

le cas de deux sources ponctuelles $R_1$, $R_2$. La figure 9a représente les différentes projections dans le plan P.

Soient $\alpha 1$ et $\alpha 2$ les projections sur le plan P du sommet de pylone $\sigma$, obtenues respectivement à partir des sources $R_1$ et $R_2$.

Soient $\alpha'_1$ et $\alpha'_2$ les projections sur le plan P du sommet de pylône $\sigma'$ obtenues respectivement à partir des sources $R_1$ et $R_2$.

Soient $\rho_1$ et $\rho_2$ les projections sur le plan P du point r, appartenant à l'objet U de position a priori inconnue, obtenues respectivement à partir des sources $R_1$ et $R_2$.

Une propriété géométrique intéressante est que les intersections des plans $\rho_1 \alpha_1 R_1$ et $\rho_2 \alpha_2 R_2$, passant tous deux par $\alpha$, avec le plan P se coupent en un point $\omega$. Ces deux plans passant par le sommet $\alpha$ et par le point r, il en résulte que les points r$\alpha\omega$ sont alignés. Il en est de même si on considère l'intersection $\omega'$ des droites intersections des plans $\rho_1 \alpha'_1 R_1$ et $\rho_2 \alpha'_2 R_2$. Donc, r, $\alpha'$, $\omega'$ sont alignés et r est situé a l'intersection des droites $\omega\alpha$ et $\omega' \alpha'$.

Pour définir la position de r dans l'espace, il suffit alors d'obtenir sa projection $\rho$ sur le plan P selon la direction commune des pylônes et sa distance par rapport au plan P.

La projection $\rho$ est obtenue par intersection des droites $\omega\beta$ et $\omega'\beta'$, en référence à la figure 9a. La côte du point r est obtenue par la construction géométrique simple illustrée par la figure 9b.

On va maintenant décrire en détail un exemple de mise en oeuvre du procédé de coordination conforme à l'invention dans son application à l'interprétation de clichés dentaires, en considérant maintenant trois clichés, obtenus à partir de trois sources ponctuelles $R_1$, $R_2$, $R_3$, concernant, en premier lieu, un objet quasi-ponctuel, puis un objet massif.

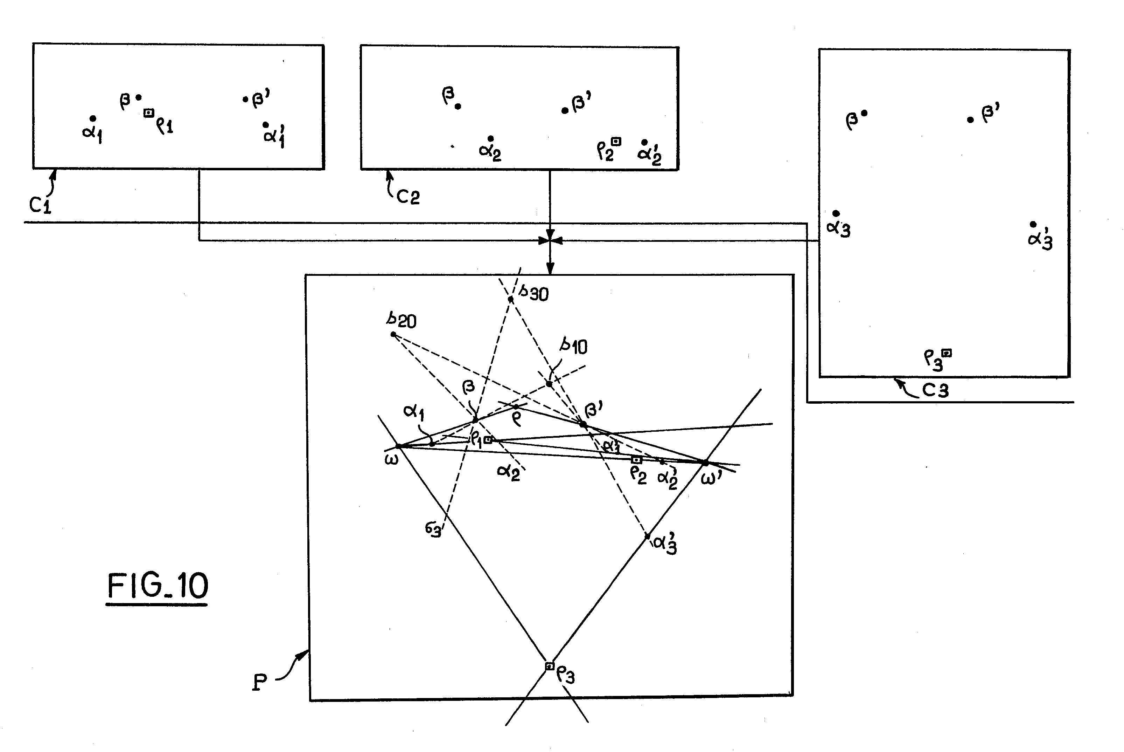

On suppose que trois clichés C1, C2, et C3 (figure 10) ont été obtenus en utilisant un étui muni de marqueurs conformes à l'invention et décrits précédemment (figure 7).

Ces trois clichés d'un même objet ponctuel r comportent : les traces $\beta$, $\beta'$ des bases des deux pylônes 8, 9, les projections respectives $\alpha_1$, $\alpha'_1$ ; $\alpha_2$, $\alpha'_2$ ; $\alpha_3$, $\alpha'_3$ des sommets $\alpha$, $\alpha'$ des pylônes, et les projections respectives $\rho_1$, $\rho_2$, $\rho_3$ du point à déterminer r.

La première étape consiste à superposer les trois clichés C1, C2, C3 en assurant la superposition des paires $\beta$, $\beta'$ de chacun des clichés. Cette étape peut être réalisée en utilisant par exemple des calques mais peut aussi être effectuée avec un traitement par ordinateur des images des clichés, ou en utilisant un carroyage, ou tout autre système. Après superposition, il est aisé de construire la projection $\rho$ du point recherché r selon l'axe des pylônes en utilisant la technique décrite précédemment (figures 8, 9a et 9b). On constate évidemment que les points $\omega$ et $\omega'$ sont les mêmes quelles que soient les paires de sources envisagées $R_1/R_2$, $R_2/R_3$, $R_1/R_3$. L'utilisation de trois sources au lieu de deux permet d'augmenter la précision de détermination de la projection du point r dans la mesure où en pratique, on ne dispose pas en toute rigueur de points, mais de taches de diamètre variable.

Il est aussi possible de déterminer les projections respectives $s_{10}$, $s_{20}$, $s_{30}$ des sources $R_1$, $R_2$, $R_3$ selon la direction axiale des pylônes 8, 9.

En effet, si on considère, à titre d'exemple, la projection $s_1$ de la source $R_1$, celle-ci est nécessairement alignée avec la trace $\beta$ de la base du pylône 8 et avec la projection $\alpha 1$ du sommet $\alpha$ du même pylône, car $\beta$ et $\alpha$ définissent une droite parallèle à la droite passant par $R_1$ et $s_{10}$ et ce par construction de $s_1$.

De même, $s_{10}$ est nécessairement alignée avec la trace $\beta'$ de la base du pylône 9 et avec la projection $\alpha'_1$ du sommet $\alpha'$ du même pylône, pour les raisons indiquées ci-dessus.

On peut donc déterminer $s_{10}$ par intersection des droites $\alpha 1\beta$ et $\alpha'_1\beta'$. Les deux autres projections $s_{20}$ et $s_{30}$ peuvent être déterminées de la même façon, par intersection des droites $\alpha_2\beta$ et $\alpha'_2\beta'$ pour $s_{20}$ et par intersection des droites $\alpha_3\beta$ et $\alpha'_3\beta'$ pour $s_{30}$.

Connaissant alors les projections $s_{10}$, $s_{20}$, $s_{30}$, la hauteur $\beta\alpha$ du pylône, et la position des projections $\alpha 1$, $\alpha 2$, $\alpha 3$ du sommet du pylône 8, il est possible de déterminer ainsi la distance des sources $R_1$, $R_2$ et $R_3$ par rapport au plan P et aux pylônes 8, 9.

Le positionnement dans l'espace des sources $R_1$, $R_2$ et $R_3$ par rapport au plan P est ainsi réalisé. La coordination des trois clichés C1, C2, et C3 est alors complète puisque l'on dispose des positions relatives de l'objet ponctuel r et des sources $R_1$, $R_2$ et $R_3$ par rapport à l'ensemble de marqueurs $\alpha$, $\alpha'$, $\beta$, $\beta'$.

De plus, un plan contenant deux sources, $R_1$ et $R_2$ par exemple, et le point r, coupera le plan image selon la droite $\rho 1$ et $\rho 2$. Le plan parallèle aux pylônes passant par les deux sources $R_1$ et $R_2$ coupera le plan image selon les droites $s_{10}$, $s_{20}$. Ces deux droites se coupent au point d'intersection de la droite $R_1 R_2$ avec le plan image et toutes les droites joignant les projections correspondantes d'un point convergent en ce point.

Si on considère maintenant un objet massif, le procédé conforme à l'invention permet de localiser cet objet dans l'espace en délimitant un volume contenant l'objet, par 6 plans tangents audit objet, la position des six points de tangence pouvant être déterminée dans l'espace.

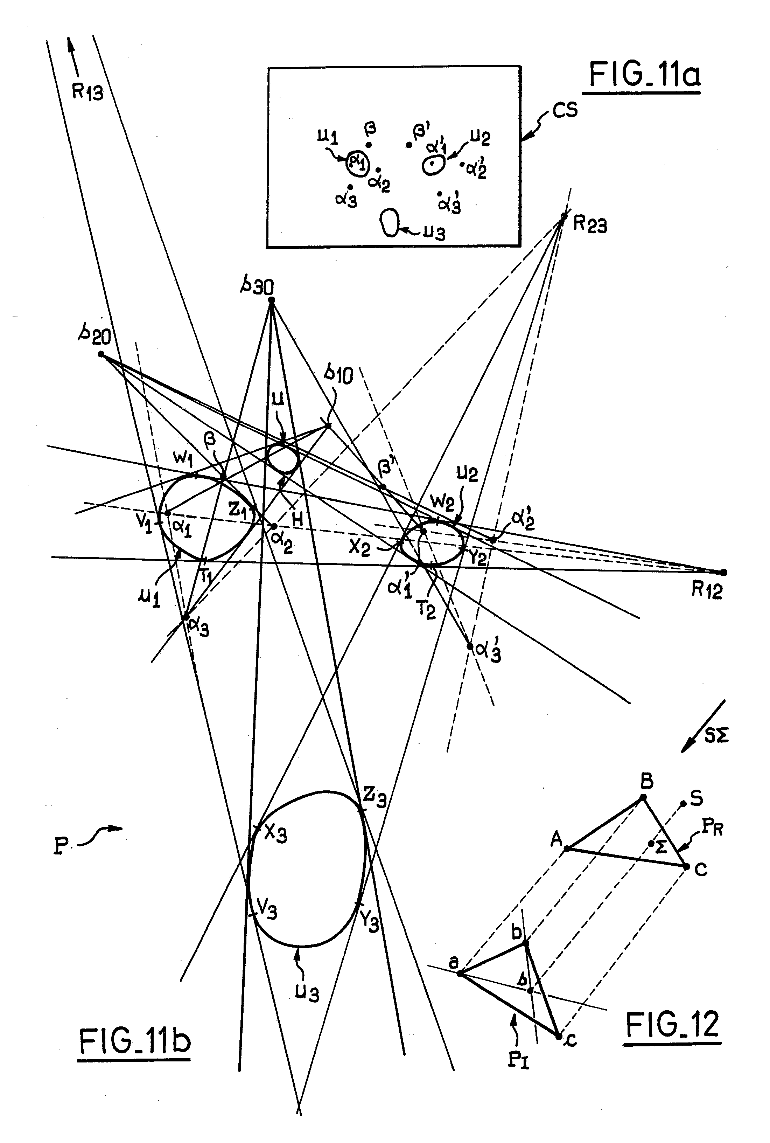

Considérons en référence à la figure 11a, 3 clichés superposés d'un objet massif U, obtenus à partir de trois sources ponctuelles $R_1$, $R_2$, $R_3$ de position a priori indéterminée par rapport aux marqueurs $\beta$, $\beta'$, $\alpha$, $\alpha'$ équipant un étui tel que celui représenté à la figure 7.

On observe sur le document de superposition CS, d'une part les projections respectives u1, u2, et u3 de l'objet massif, et d'autre part, les traces $\beta$, $\beta'$ des bases des pylônes 8, 9 et les projections $\alpha_1$, $\alpha_2$, $\alpha_3$ ; $\alpha'_1$, $\alpha'_2$, $\alpha'_3$, telles que décrites précédemment.

Le but du procédé conforme à l'invention est de localiser d'une part les sources $R_1$, $R_2$, et $R_3$ et d'autre part l'objet massif U. Il s'agit pour cela de déterminer les projections $s_{10}$, $s_{20}$ et $s_{30}$ des sources $R_1$, $R_2$, $R_3$ sur le plan P selon la direction des pylônes ainsi que la distance respective des sources $R_1$, $R_2$, $R_3$, par rapport au plan P. Cette détermination est effectuée comme cela a été décrit précédemment. Connaissant $s_{10}$, $s_{20}$ et $s_{30}$, il est possible de déterminer un hexagone contenant la projection de l'objet massif U sur le plan P selon la direction des pylones. En effet, si on considère pour chaque projection u1, u2, u3 de l'objet U sur le plan P à partir des sources ponctuelles $R_1$, $R_2$, $R_3$, les deux droites passant par la projection de chaque source $s_{10}$, $s_{20}$, $s_{30}$ et tangentes à la projection u1, u2, u3, les intersections des trois faisceaux de droites, intersection avec le plan image des plans parallèles aux pylônes et tangents à l'objet, définissent un hexagone H dans lequel la projection u est inscrite.

Il est par ailleurs possible de déterminer six points de tangence appartenant à l'objet U que l'on cherche à localiser.

On peut en effet utiliser la propriété géométrique suivante déjà mentionnée :
les images projetées d'un point quelconque à partir de deux sources sont alignées sur une droite passant par l'intersection de la droite joignant les deux sources avec le plan de projection.

Pour définir les intersections correspondantes $R_{12}$, $R_{23}$, $R_{13}$, il suffit ainsi de tracer respectivement :
- la droite passant par $\alpha1$ et par $\alpha2$ et la droite passant par $\alpha'_1$ et par $\alpha'_2$,
- la droite passant par $\alpha2$ et par $\alpha3$ et la droite passant par $\alpha'_2$ et par $\alpha'_3$,
- la droite passant par $\alpha1$ et par $\alpha3$ et la droite passant par $\alpha'_1$ et par $\alpha'_3$.

De plus, les contours apparents de deux projections u1 et u2, par $R_1$ et $R_2$ par exemple, de l'objet U sont tangents à deux droites passant par la même intersection de $R_1R_2$ avec le plan P : les points de tangence sont définis, dans l'espace, par la tangence à l'objet du plan passant par $R_1$ et $R_2$ dont la trace sur le plan image est la tangente commune. Un raisonnement identique peut être tenu pour les paires $R_1$ $R_3$ et $R_2$ $R_3$. Avec trois sources, il existe donc six de ces points dont les positions dans l'espace sont connues et qui permettent de positionner l'objet.

Dans l'exemple représenté à la figure 11b, à partir de l'intersection $R_{12}$, on définit dans le plan P les points de tangence $W_1$, $T_1$ (projection u1) et $W_2$, $T_2$ (projection u2). A partir de l'intersection $R_{23}$, on définit les points de tangence $X_2$, $Y_2$ (projection u2) et $X_3$, $Y_3$ (projection u3) et à partir de l'intersection $R_{13}$ (non représentée), on définit les points de tangence $Z_1$, $V_1$ (projection u1) et $Z_3$, $V_3$ (projection u3). Il est ensuite aisé de déterminer la position dans l'espace des six points W, T, X, Y, Z, V, connaissant leurs projections respectives sur le plan P et en suivant la méthode précédemment indiquée.

Chacun des points de tangence W, T, X, Y, Z, V correspond à la tangence d'un plan passant par deux des trois sources $R_1$, $R_2$, $R_3$ avec l'objet massif U. La combinaison de ces six plans définit donc un volume dans lequel est inscrit l'objet et dont les points de tangence sont connus.

La méthode géométrique décrite ici peut être utilisée soit graphiquement, soit être programmée sur ordinateur ou calculateur, soit encore avec des dispositifs mécaniques, tels des aiguilles ou des fils tendus mobiles et ajustables figurant les différents rayons ou droites de projection, soit encore par des rayons lumineux ou tout autre moyen de simulation, combiné ou non.

Dans le cas plus général où la source est à l'infini ou en scintigraphie par exemple, la collimation assure le parallélisme des rayons formant l'image, et tous les segments sur les droites de l'image projetante et de l'image projetée sont proportionnels. Il est donc aisé de trouver la rétroprojection $\Sigma$ du point extérieur S sur le plan de référence à partir de sa projection s sur le plan image, en référence à la figure 12. La direction $S\Sigma$ donne alors immédiatement la direction de la projection parallèle; soit ABC le triangle dans le plan de référence, se projetant en abc sur le plan image ; $S\Sigma$, la direction de projection parallèle. Dans le plan $S\Sigma sAa$, il est possible, en supposant s et $\Sigma$ confondus, de construire la figure SsAa puisque Ss, SA, sa sont connus de même que la direction Aa parallèle à Ss. Il en est de même pour le plan $S\Sigma sBb$. On en déduit donc la position du plan image défini par les droites Sa et Sb.

La résolution des procédés spécifiques décrits précédemment a suivi une voie géométrique, d'une part pour en faire saisir la réalité, et, de l'autre, le caractère pratique. Cependant ces procédés peuvent aussi se résoudre par des systèmes d'équations dont la plupart sont du premier degré. Selon les cas, l'une ou l'autre des solutions pourront être utilisées mais, plus le système de points identifiables sera complexe, plus une solution algébrique sera favorisée. Tel sera le cas, en particulier, si l'on combine des points "Marqueurs" de géométrie connue, mais en nombre insuffisant, par exemple quatre points coplanaires ou non, avec d'autres points identifiables mais de géométrie inconnue.

Un tel cas peut également se produire lorsque, bien que les points "Marqueurs" soient en nombre suffisant, certaines de leurs traces n'apparaissent pas sur certaines images et qu'il y ait, par contre, des points identifiables.

Enfin, il est possible, à partir d'un nombre réduit d'images comportant les traces d'un système complet de "Marqueurs" de géométrie connue, d'établir la relation géométrique avec un système de points identifiables, ainsi qu'il est montré à propos de clichés dentaires.

La description ci-après explique la solution algébrique du procédé selon l'invention.

La coordination précise des images entre elles, nécessite une définition de l'espace contenant l'objet, faite par exemple, à partir de repères fixes par rapport à l'objet, donnant, sur les images, des traces à partir desquelles se fera la définition recherchée.

Ces repères peuvent être des points afin qu'il ne puisse y avoir d'ambiguïté quelle que soit la direction dans laquelle ils sont observés, ou des éléments individualisables permettant une localisation précise.

Ces repères peuvent être, soit préexistants sur l'objet, mais de position inconnue tels des points singuliers identifiables sur les images, soit accolés à l'objet et de géométrie connue, soit un mélange des deux systèmes. Dans le cas le plus général, on conçoit que le nombre de points identifiables sur l'objet, de position géométrique inconnue, nécessaires pour définir l'espace sans ambiguïté, dépende du nombre d'images de l'objet. Une analyse paramétrique indique que le problème comporte une solution.

Dans la démonstration, l'image est supposée être plane mais le raisonnement est le même pour toute autre surface qui n'est coupée qu'une fois par les rayons.

En effet, un plan dans l'espace d'équation $Ax + By + Cz + 1 = 0$ est caractérisé par 3 paramètres A, B et C.

Un point dans un tel plan est défini par deux paramètres car ses coordonnées ne sont pas indépendantes, liées entre elles par l'équation du plan. Un deuxième point, de position connue par rapport au premier, dépend d'un seul paramètre de direction, comme étant dans le plan et à une distance connue : deux points dans le plan sont donc définis par trois paramètres. Les coordonnées de tous autres points connus dans le plan ne dépendent que de ces trois paramètres initiaux puisqu'ils sont définis par leur distances aux deux points de base. Une figure connue dans un tel plan ne dépend donc que de trois paramètres.

Une figure connue dans un plan dépend donc de six paramètres : trois pour le plan et trois pour la figure.

Chaque autre point de l'espace, point identifiable ou source, est défini par ses trois coordonnées.

Enfin, un point identifiable, sa trace sur une plaque et la source sont alignés.

Trois points alignés peuvent, par exemple, être considérés comme appartenant à deux plans et sur l'intersection de ces deux plans, et aussi les rapports des différences entre les coordonnées de ces trois points sont égaux. Ceci représente deux équations entre les coordonnées des trois points, ou trois équations assorties d'une constante.

Ainsi, si A, B, et C sont les paramètres recherchés d'un plan image, si a, b, et c sont les paramètres recherchés d'un point de ce plan, a′, b′ et c′ ceux d'un deuxième point situé à une distance r, a″, b″ et c″ ceux d'un troisième point situé à des distances d du premier et l du second, on a :

Coordonnées du 1er point a, b et $c = 1 - Aa - Bb/\overline{C}$

Les coordonnées du 2ème point sont définies en en écrivant que la distance avec le premier point est r, soit :

$$(a-a')^2+(b-b')^2+(c-c')^2 = r^2 \text{ avec } c-c' = A(a'-a) + \frac{B(b'-b)}{C}$$

Il en ressort la relation suivante entre a′, b′ et r :

$$(a-a')^2+(b-b')^2 + \left[A(a-a') + \frac{B(b-b')}{C}\right]^2 = r^2$$

Les coordonnées du 2ème point sont alors obtenues en fonction de $a'$ et de $r$ par les deux relations :

$(B^2 + C^2)(b-b')^2 + 2AB((a-a')(b-b') + (a-a')^2 (A^2 + C^2) - C^2 r = 0$

qui donne $b'$ avec deux signes possibles et :

$c' = c -$

Connaissant les distances $d$ et $l$, $d'$ et $l'$ etc, des autres points à ces deux premiers, leurs coordonnées $a''$, $b''$ et $c''$, $a'''$, $b'''$ et $c'''$, etc sont définies en fonction de $A, B, C, a, b,$ et $a'$ par les relations de distance telles que :

$(a''' - a) + (b'''-b)^2 + (c'''-c)^2 = d^2$ et

$(a'''-a')^2 + (b'''-b')^2 + (c'''-c')^2 = l^2$

Ainsi tous les points connus dans un plan inconnu sont bien définis par les 6 paramètres ci-dessus appelés $A, B, C, a, b,$ et $a'$.

Pour abréger, on appellera maintenant $a_1, b_1, c_1$ à $a_p, b_p, c_p$ les coordonnées de $p$ points connus dans un plan, fonction de 6 paramètres.

L'imprécision due au signe à mettre en face de la racine carrée peut être levée par l'opérateur puisque l'on connaît les positions approximatives de l'objet, des sources et des plaques.

Soit, maintenant $P, Q$ et $R$ les coordonnées recherchées d'un point identifiable, $S, T$ et $U$ celles d'une source. Etant donné que source, point et traces sont alignés, il en résulte que :

$$\frac{P-S}{P-a} = \frac{Q-T}{Q-b} = \frac{R-U}{R-c} = k \quad \text{(constante : rapport des distances sur le rayon)}$$

ce qui représente deux équations entre les coordonnées des sources/points/traces. Ceci peut egalement s'écrire :

$P-S = k(P-a)$

$Q-T = k(Q-b)$

$R-U = k(R-c)$

L'ensemble de ces équations, étendu à tous les couples Source/Plan Image représente une matrice dont, pour être soluble, le nombre d'équations doit être supérieur ou égal au nombre d'inconnues. La solution d'une telle matrice peut se faire, soit par les méthodes d'inversion classiques, soit par tout autre procédé adéquat.

Si $n$ est le nombre d'ensemble source/plaque et $p$ le nombre de points identifiables et visibles sur toutes les images, ces inconnues sont au nombre de :

sources $3n$

plans images $6n$

points identifiables $3p$

soit, au total $9n + 3p$ inconnues.

On a vue que, pour chaque point identifiable, il y a deux équations de relation pour chaque ensemble source/plaque, soit un total de $2pn$ équations.

Pour que le système ait une solution, il faut donc que :

$2pn \geq 9n + 3p - S$

en appelant $S$ le nombre de relations connues entre les éléments de l'ensemble, chacune de ces relations (comme, par exemple, une distance) diminuant le nombre de paramètres indépendants à trouver, donc le nombre d'équations et, par là même, le nombre de points nécessaires.

Il est loisible de prendre l'un des plans images comme plan de référence, fixant ainsi, a priori, les paramètres et de ce plan et de l'image qu'il contient.

C'est ainsi que si trois images indépendantes sont utilisées, sept points identifiables sont nécessaires, que ce nombre tombe à six dans le cas de plus de trois images, mais monte à douze pour deux images seulement.

L'adjonction de contraintes supplémentaires permet de réduire le nombre de points nécessaires. Tel est le cas décrit précédemment, en particulier, de l'utilisation d'un ensemble de points de géométrie connue, que nous nommerons "Marqueurs", et qui sont intégrés ou liés à l'objet à examiner ; ce nombre minimum de points étant alors de cinq.

Le procédé de coordination d'images conforme à l'invention peut avoir de nombreuses applications et dans un champ très étendu en adaptant la nature des marqueurs au type de sources utilisées :

- en imagerie médicale pour coordonner entre elles des vues prises avec des moyens ou des sources diverses,
- en chirurgie dentaire : les marqueurs, introduits et liés à la bouche du patient, permettent le repérage de points ou de zones sensibles,
- en industrie : pour permettre des contrôles de fabrication, de montage, de jeux, d'usures de défauts en trois dimensions,
- en contrôle non destructif : il est alors possible d'utiliser des appareils simples et portatifs.

Bien entendu, l'invention n'est pas limitée aux exemples de réalisation que l'on vient de décrire et on peut apporter à ceux-ci de nombreuses modifications sans sortir du cadre de l'invention.

Ainsi, l'étui décrit précédemment pour l'application en chirurgie dentaire peut présenter une structure différente dans laquelle les pylones de support des marqueurs sont remplacés par des arceaux reliant rigidement des marqueurs au plan supportant la plaque photographique, permettant ainsi que la plaque et les marqueurs soient situés respectivement de part et d'autre de la dent ou de l'ensemble de dents.

Par ailleurs, d'autres systèmes de points peuvent être utilisés comme marqueurs, dans la mesure où ils permettent des localisations précises, par exemple, un cercle dont le centre est marqué ou un triangle avec, en un sommet, une parallèle au côté opposé.

En outre, le procède de coordination conforme à l'invention peut aussi être associé utilement à d'autres techniques d'investigation telles que la scintigraphie, en prévoyant par exemple une substitution d'un système de marqueurs par un autre système de nature différente, ou des marqueurs polyvalents.

## Revendications

1. Procédé pour coordonner dans l'espace plusieurs images par transparence ou photographie d'un même·objet (U) obtenues par projection sur un ou plusieurs plans images ($P_{l1}$, $P_{l2}$) à partir d'au moins deux points de convergence ou sources ($R_1$, $R_2$),caractérisé par les étapes suivantes :

A) on associe à l'objet au moins un ensemble (M) d'au moins cinq points (A, B, C, O, S) liés audit objet (V) et appelés marqueurs, quatre au moins desdits points appartenant à un même plan dit de référence ($P_R$), et un au moins desdits points (S) étant extérieur audit plan de référence ($P_R$), lesdits points marqueurs étant d'une nature telle et situés de telle façon qu'ils apparaissent sur lesdites images et qu'ils soient individuellement identifiables ;

B) on détermine à partir des projections respectives desdits marqueurs (A, B, C, O) appartenant audit plan de référence ($P_R$) sur chacun desdits plans images ($P_{11}$, $P_{12}$), obtenues à partir desdites sources ($R_1$, $R_2$), les directions respectives des intersections de chacun desdits plans images ($P_{l1}$, $P_{l2}$) avec ledit plan de référence ($P_R$),

C) on détermine ensuite à partir des projections respectives desdits marqueurs extérieurs (S) audit plan de référence, les positions respectives de chacune desdites sources ($R_1$, $R_2$) et desdits plans-images ($P_{l1}$, $P_{l2}$) par rapport audit plan de référence ($P_R$),

D) on effectue par la connaissance desdites positions, la coordination des différentes droites concourant à la formation des projections dudit objet (U) sur chacun desdits plans images ($P_{l1}$, $P_{l2}$).

2. Procédé conforme à la revendication 1, caractérisé en ce que l'on associe audit objet au moins deux plans de référence distincts mais liés ($P_{R1}$, $P_{R2}$) comprenant chacun un ensemble de quatre points coplanaires ($A_1$, $B_1$, $C_1$, $O_1$ ; $A_2$, $B_2$, $C_2$, $C_2$, $O_2$) chacun desdits ensembes de points coplanaires constituant avec l'un quelconque des points appartenant aux autres ensembles de points coplanaires, un système de points marqueurs.

3. Procédé conforme à la revendication 1, caractérisé en ce que ledit plan de référence ($P_R$) et ledit plan image ($P_l$) sont parallèles et que ledit ensemble (M) de points marqueurs associé audit objet (U) comprend au moins deux points extérieurs audit plan de référence ($P_R$).

4. Procédé conforme à la revendication 1, caractérisé en ce que l'ensemble desdits points marqueurs comprend plusieurs sous-ensembles (M) d'au moins cinq points marqueurs, lesdits sous-ensembles étant liés entre eux et en ce qu'au moins un sous-ensemble apparaît sur chacune desdites images.

5. Procédé conforme à la revendication 1, caractérisé en ce que l'un au moins desdits plans images est sensiblement confondu avec ledit plan de référence ($P_R$).

6. Procédé pour coordonner dans l'espace plusieurs images d'un même objet (U) obtenues par projection sur un plan image (P) à partir d'au moins deux points de convergence ou sources ($R_1$, $R_2$, $R_3$)-,caractérisé par les étapes suivantes :

A) on associe au plan image (P), un plan de référence lié audit objet, sensiblement confondu avec ledit plan image (P) et un système de marqueurs comprenant au moins deux couples de points marqueurs ($\beta$, $\alpha$ ; $\beta'$, $\alpha'$) comportant au moins deux points ($\beta$, $\beta'$) dans ledit plan de référence et au moins deux points

( $\alpha$, $\alpha'$) à l'extérieur dudit plan de référence, les droites joignant chaque point extérieur ( $\alpha$, $\alpha'$) au point correspondant ($\beta$, $\beta'$) dans ledit plan de référence étant parallèles et définissant une direction de projection cylindrique,

B) on détermine à partir des projections desdits points extérieurs sur ledit plan de référence les positions desdites sources ($R_1$, $R_2$, $R_3$),

C) on détermine d'après les projections desdits points extérieurs et les positions desdits points marqueurs compris dans ledit plan de référence, les projections desdites sources ($R_1$, $R_2$, $R_3$) parallèlement auxdites droites de jonction, et leurs positions dans l'espace, par rapport auxdites projections desdits points extérieurs,

D) on détermine ensuite les intersections des droites joignant lesdites sources deux à deux avec ledit plan image (P) et, par lesdits points d'intersection, les tangentes communes respectivement à deux projections dudit objet à partir desdites sources et les points de tangence correspondants, puis les projections cylindriques desdits points de tangence audit objet sur ledit plan image (P) et leurs cotes dans l'espace.

E) on détermine alors, à partir desdites projections cylindriques desdites sources ($R_1$, $R_2$, $R_3$) sur ledit plan image (P) et des projections respectives de l'objet sur ledit plan image et à partir des projections dudit objet (U) sur ledit plan image (P) à partir desdites sources ($R_1$, $R_2$, $R_3$), un polyèdre dans ledit plan image (P) délimitant la projection cylindrique dudit objet (U) selon ladite direction de projection cylindrique,

F) on détermine, à partir desdites positions spatiales desdites sources ($R_1$, $R_2$, $R_3$) et à partir des projections dudit objet (U) obtenues à partir desdites sources ($R_1$, $R_2$, $R_3$) un espace géométrique fermé tridimensionnel contenant ledit objet (U).

7. Procédé pour coordonner dans l'espace plusieurs images d'un objet contenant des sources internes de radiations, soit spontanées, soit induites par un flux extérieur, caractérisé par les étapes suivantes :

A) on associe à l'objet au moins un ensemble d'au moins cinq points liés audit objet et appelés marqueurs, quatre desdits points formant un plan de référence, et un au moins desdits points étant extérieur audit plan de référence, lesdits points marqueurs étant d'une nature telle qu'ils donnent après collimation des traces sur lesdites images et situés de telle façon qu'ils apparaissent sur lesdites images et soient individuellement identifiables,

B) on détermine, après collimation, sur chaque image produite par lesdites sources internes, la trace desdits points marqueurs appartenant audit plan de référence, et celle dudit point extérieur

C) on détermine ensuite, après collimation, sur chaque image produite par lesdites sources internes, à partir des traces desdits points marqueurs, les directions de collimation et les positions respectives de chacun desdits plans images par rapport audit plan de référence, et

D) on effectue alors la localisation dans l'espace des différentes droites de collimation concourant à la formation des images dudit objet sur chacun desdits plans images par rapport audit plan de référence.

8. Dispositif pour coordonner plusieurs images d'au moins un même objet (U), comprenant des moyens pour obtenir des projections sur des plans images ($P_{I1}$, $P_{I2}$) dudit objet (U) par transmission d'ondes à partir de plusieurs points de convergence ou sources, et mettant en oeuvre le procédé conforme à l'invention, caractérisé en ce qu'il comprend :

A) des moyens marqueurs (A, B, C, O, S) liés audit objet (U) définissant au moins un plan de référence ($P_R$), d'une nature telle et situés de telle façon que lesdits moyens marqueurs apparaissent sur lesdites images et soient individuellement identifiables,

B) des moyens pour déterminer les directions d'intersection respectives desdits plans images ($P_{I1}$ $P_{I2}$) avec ledit plan de référence ($P_R$), à partir des projections desdits moyens marqueurs (A, B, C, O, S) sur lesdits plans images ($P_{I1}$, $P_{I2}$),

C) des moyens pour déterminer les positions respectives desdites sources ($R_1$, $R_2$) et desdits plans images ($P_{I1}$, $P_{I2}$) par rapport auxdits moyens marqueurs, à partir desdites directions d'intersection et desdites projections desdits moyens marqueurs et,

D) des moyens pour coordonner dans l'espace les rayons concourant à la formation desdites projections de l'objet (U) à partir des positions respectives desdits plans images ($P_{I1}$, $P_{I2}$) et desdites sources ($R_1$, $R_2$) par rapport auxdits moyens marqueurs (A, B, C, O, S).

9. Dispositif conforme à la revendication 8, caractérisé en ce que lesdits moyens marqueurs (A, B, C, O, S) comprennent des éléments géométriques influençant sensiblement la transmission d'ondes émises par lesdites sources ($R_1$, $R_2$), lesdits éléments géométriques comprenant au moins quatre points (A, B, C, O) dans un même plan, de référence ($P_R$), et au moins un point extérieur (S) audit plan de référence ($P_R$).

10. Dispositif conforme à la revendication 8, caractérisé en ce que lesdits moyens marqueurs comprennent des éléments géométriques influençant sensiblement la transmission d'ondes émises par lesdites sources et en ce que lesdits éléments géométriques comprennent au moins trois points définissant un plan de référence sensiblement parallèle audit plan image et aux moins deux points extérieurs audit plan de référence.

11. Dispositif conforme à la revendication 8, caractérisé en ce qu'il comprend en outre des moyens pour contenir un support sensible auxdites ondes définissant un plan image, lesdits moyens définissant eux-mêmes un plan de référence sensiblement confondu avec ledit plan image, et en ce que lesdits moyens marqueurs comprennent au moins deux pylônes fixés auxdits moyens conteneurs et orientés parallèlement l'un à l'autre, lesdits pylônes comportant à chacune de leurs extrémités un élément marqueur constitué d'un matériau influençant la transmission d'ondes émises par lesdites sources.

12. Dispositif conforme à la revendication 11, caractérisé en ce que lesdits moyens marqueurs comprennent deux pylones (8, 9) fixés auxdits moyens conteneurs (1), orientés parallèlement l'un à l'autre, lesdits pylônes (8, 9) comportant à chacune de leurs extrémités des éléments marqueurs (4, 6 ; 5, 7) constitués d'un matériau influencant la transmission d'ondes émises par lesdites sources.

13. Dispositif conforme à l'une des revendications 11 ou 12, caractérisé en ce que iesdits moyens (1) pour contenir ledit support sensible (3) consistent en un étui rigide sensiblement plan, muni d'au moins une fente d'insertion (2a, 2b) et dans lequel ledit support radiosensible (3) est inséré.

14. Dispositif conforme à la revendication 8 à 13, caractérisé en ce que lesdits moyens selon B) à D) comprennent un ordinateur, pour calculer les coordonnées de l'ensemble des éléments couplé à des dispositifs d'analyse d'images.

15. Dispositif pour coordonner plusieurs images d'un même objet, obtenues par collimation sur plusieurs plans images de radiations liées audit objet, soit spontanées, soit induites, mettant en oeuvre le procédé conforme à l'invention, caractérisé en ce qu'il comprend :

A) des moyens marqueurs pouvant émettre des radiations liés audit objet, définissant au moins un plan de référence et un point extérieur, d'une nature telle et situés de sorte que des traces desdits moyens marqueurs apparaissent après collimation sur lesdites images et soient individuellement identifiables,

B) des moyens pour déterminer les directions de collimation et les positions respectives desdits plans images par rapport auxdits moyens marqueurs, à partir desdites traces desdits moyens marqueurs,

C) des moyens pour coordonner dans l'espace des rayons concourant à la formation des images dudit objet à partir des positions respectives desdits plans images et desdites directions de collimation par rapport auxdits moyens marqueurs.

16. Dispositif conforme à la revendication 15, caractérisé en ce qu'il peut être en outre combiné à un dispositif de coordination conforme à l'une des revendications 12 à 14.

17. Dispositif conforme à la revendication 8, caractérisé en ce que lesdits moyens marqueurs sont soit de nature telle qu'on puisse en observer les traces dans plusieurs procédés d'image utilisés, soit composés de systèmes liés, chacun desdits systèmes étant approprié à un desdits procédés utilisés, soit enfin substituables en fonction du procédé utilisé.

18. Procédé pour coordonner dans l'espace plusieurs images d'un même objet obtenues par transparence ou par reproduction notamment photographique, ces images etant obtenues à partir d'un nombre n de moyens sur un nombre $\underline{n}$ de plans ou surfaces images confondus ou non, ce procédé étant caractérisé par les étapes suivantes :

A) on utilise un ensemble constitué par un nombre $\underline{P}$ de points remarquables et identifiables, préexistants sur l'objet ou associés à celui-ci et dont les traces soient visibles sur toutes les images,

B) on détermine à partir de cet ensemble de points, dans un système de repères pratiques, les coordonnées de l'ensemble de sources, points identifiables et surfaces images à partir des images desdits points sur les différentes images,

C) ces coordonnées étant calculées, en résolvant un ensemble de relations linéaires résultant de l'alignement des points, de leur image et de l'origine des rayons utilisés pour former lesdites images desdits points,

D) cet ensemble de relations étant représenté par une matrice dont la solution est possible compte-tenu de la relation $2pn \geq 9n + 3p\text{-}S$ où S represente le nombre de relations géométriques connues existant dans le système, cette relation déterminant le nombre minimum de points requis.

FIG_1

FIG_1a

FIG_2

$(P_R)$

$\Sigma$

$\Sigma_1$

$\Sigma_3$

B

B'

A

0

D

D'

$\Sigma_2$

$\Sigma_4$

I

C'

C

$(P_I)$

b

b'

a

0

d

$b_1$

$b_2$

i

c

FIG_3

$(P'_I)$

b'

$b'_3$

a'

0

$b'_4$

i'

c'

FIG_4

FIG.5

FIG.6

FIG_7

FIG_8

FIG.9a

FIG.9b

FIG_10

EP 0 374 045 A1

FIG.11a

FIG.11b

FIG.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | ARTIFICIAL INTELLIGENCE, vol. 30, no. 3, décembre 1986, pages 289-341, Amsterdam, NL; MARTIN HERMAN and TAKEO KANADE: "Incremental reconstruction of 3D scenes from multiple, complex images" <br> * Figures 2,19; résumé; page 294, lignes 24-37; page 295, lignes 11-24 * | 15,18 | G 06 F 15/62 <br> A 61 B 6/02 |
| A | IDEM <br> --- | 1,6,7,8 | |
| A | EP-A-0 010 797 (PHILIPS PATENTVERWALTUNG GmbH) <br> * Figures 1,2; résumé * <br> --- | 1,6,7,8 ,15,18 | |
| A | US-A-4 769 756 (R.L. WEBBER) <br> * Résumé; colonne 1, lignes 58-68; colonne 2, lignes 1-22 * <br> ----- | 1,6,7,8 ,15,18 | |

**DOMAINES TECHNIQUES RECHERCHES (Int. Cl.5)**

G 06 F
A 61 B

Le présent rapport a été établi pour toutes les revendications

| Lieu de la recherche | Date d'achèvement de la recherche | Examinateur |
|---|---|---|
| LA HAYE | 20-03-1990 | VAN DOREMALEN,J.C.H. |